# EUROPEAN PATENT APPLICATION

(11) **EP 4 273 966 A1**
(43) Date of publication of application: **08.11.2023**
(21) Application number: 21913327.9
(22) Date of filing: 13.10.2021
(51) Int. Cl.: H01M 4/587, H01M 4/38

(54) **SILICON-DOPED GRAPHENE COMPOSITE MATERIAL, PREPARATION METHOD FOR SAME, AND APPLICATIONS THEREOF**

(30) Priority: 31.12.2020 CN 202011637262
(71) Applicant: Guangdong Brunp Recycling Technology Co., Ltd, Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: YU, Haijun, Foshan, Guangdong 528137 (CN); PENG, Ting, Foshan, Guangdong 528137 (CN); XIE, Yinghao, Foshan, Guangdong 528137 (CN); ZHANG, Xuemei, Foshan, Guangdong 528137 (CN)
(74) Representative: Meyer, Thorsten
(86) International application number: PCT/CN2021/123391
(87) International publication number: WO 2022/142582

(57) **Abstract**

Disclosed are a silicon-doped graphene composite material and a preparation method and application thereof. The silicon-doped graphene composite material comprises silicon and graphene; the silicon is doped in the graphene. The silicon-doped graphene composite material of the present disclosure has excellent charge and discharge capacity and structural stability; the silicon-doped graphene composite material is based on the graphene structure, with silicon atoms replacing the carbon atoms in a two-dimensional network structure of the graphene. The silicon-doped graphene composite material of the present disclosure has a layered structure similar to graphite materials, but is superior to other graphene materials in charge and discharge capacity, which is due to the fact that lithium intercalation sites are constructed by the silicon doped sites.

## Description

### TECHNICAL FIELD

The present disclosure relates to the field of battery materials, in particular to a silicon-doped graphene-based composite material and a preparation method and application thereof.

### BACKGROUND

Lithium-ion batteries have the advantages of high energy density, long cycle life, and low environmental pollution. They have become the focus of research in countries around the world and have been widely used in computers, mobile phones and other portable electronic devices. However, with the rapid development of electric vehicles and advanced electronic equipment, higher requirements have been placed on the energy density of lithium-ion batteries. The key to improving the energy density of lithium-ion batteries lies in the improvement of electrode materials and the improvement of performance. At present, the negative electrode materials of commercial lithium-ion batteries are mainly graphite materials, due to their low theoretical specific capacity (only 372m Ah/g) and poor rate performance. Therefore, scientists are committed to researching new high-capacity anode materials. Silicon has attracted much attention due to its high theoretical specific capacity (4200 mAh/g). Its lithium extraction voltage platform is low (<0.5 V), and it reacts with the electrolyte. It has low activity, abundant reserves in the earth's crust, and low price. As a negative electrode material for lithium-ion batteries, it has broad development prospects. However, the volume of silicon undergoes a huge change (>300%) during the process of deintercalating lithium, which causes the active material to rapidly pulverize and fall off during the charge-discharge cycle, resulting in the loss of electrical contact between the electrode active material and the current collector. At the same time, due to the huge volume expansion of the silicon material, the solid electrolyte interface membrane cannot exist stably in the electrolyte, resulting in reduced cycle life and capacity loss. In addition, the low electrical conductivity of silicon severely limits the full utilization of its capacity and the rate performance of silicon electrode materials. At present, the methods to solve these problems include: nanometerization, compositeization and other methods. Nanotechnology and silicon-carbon composite technology are the research focus of scientists, and significant progress has been made to improve the cycle performance and rate performance of silicon anode materials. At present, the recycling of waste lithium-ion batteries is mainly focused on recycling of materials for positive electrode. However, during the charging and discharging process of a battery, the structure of the negative electrode graphite has hardly changed, which is of great significance for recycling. Proton exchange membrane fuel cells are ideal power cells due to their advantages of low emission, high conversion efficiency and high energy density. Platinum-based catalysts are the best catalysts in oxygen reduction reaction of fuel cells. However, platinum is expensive and has few reserves. Therefore, it is necessary to develop low-platinum or non-platinum catalysts. Among them, carbonbased catalysts doped with non-noble metals have good catalytic activity and low preparation cost, so that they are one of the current research hotspots.

Silicon-based materials can be used as anode materials for lithium-ion batteries due to their high theoretical specific capacity. However, there are disadvantages such as huge volume effects during charging and discharging processes, low conductivity and unsatisfactory cycle life, which hinder their commercial application. But it cannot deny that the material has great application prospects. The research by scientists focuses on minimizing the first irreversible capacity, alleviating the volume expansion of the material, thereby improving the rate and cycle performance.

### SUMMARY OF THE INVENTION

The present disclosure aims to solve at least one of the technical problems existing in the above-mentioned prior art. To this end, the present disclosure provides a silicon-doped graphene composite material and a preparation method and application thereof. The silicon-doped graphene composite material has excellent charge and discharge capacity and structural stability. The material is based on the graphene structure, where silicon atoms replace the carbon atoms in the two-dimensional network structure of the graphene.

In order to achieve the above objectives, the present disclosure provides a silicon-doped graphene composite material, comprising silicon and graphene; wherein the silicon is doped in the graphene, which specifically means that in each layer of the graphene, part of the carbon atoms are replaced by silicon atoms, and the silicon atoms are connected to the other carbon atoms in each layer of the graphene by silicon-carbon bonds.

In some embodiments, the molar ratio of the silicon to the carbon in the silicon-doped graphene composite material is 1: (10-120).

In some other embodiments, the molar ratio of the silicon to the carbon in the silicon-doped graphene composite material is 1: (20-100).

A method for preparing a silicon-doped graphene composite material comprising the following steps:
(1) Microwave heating graphene in an ammonia atmosphere to obtain a nitrogen-doped graphene;
(2) Adding the nitrogen-doped graphene, silicon nanoparticles, and an organic acid to a solvent to perform a solvothermal reaction, and washing a resulting product to obtain the silicon-doped graphene composite material.

In some embodiments, in step (1), the microwave heating is carried out at a temperature of 100°C-120°C for 20-40 min.

In some embodiments, in step (2), the organic acid is citric acid monohydrate.

In some embodiments, in step (2), the mass ratio of the nitrogen-doped graphene, the silicon nano particles and the organic acid is 1:(0.01-0.1) :(1-3).

In some embodiments, in step (2), the solvent is anhydrous ethanol.

In some embodiments, in step (2), the solvothermal reaction is carried out at a temperature of 150°C-160°C for 6-10 h.

In some embodiments, in step (2), the washing is performed with a solvent of anhydrous ethanol, and the washings is carried out 3-5 times.

In some embodiments, the graphene is prepared by the following method:
1) Discharging and disassembling a waste lithium battery to obtain a negative electrode, subjecting the negative electrode sheet to heating, and then placing it in water to perform an ultrasonic treatment to obtain a graphite negative electrode material and a current collector;
2) Immersing the graphite negative electrode material with an acid solution, filtering to obtain a filter residue, subjecting the filter residue to washing, drying, and calcinating to obtain the repaired graphite material;
3) Mixing the repaired graphite material, potassium permanganate and an acid solution to obtain a mixture, and heating the mixture to perform a reaction to obtain a suspension;
4) Adding hydrogen peroxide to the suspension to perform a hydrothermal reaction, centrifuging a resulting product to obtain a filter residue, subjecting the filter residue to washing, drying and heating to obtain the graphene.

In some other embodiments, in step 1), the heating temperature is 100°C-150°C.

In some other embodiments, in step 1), the ultrasonic treatment is carried out for 30-60 min.

In some other embodiments, in step 2), the acid solution is at least one selected from the group consisting of sulfuric acid, nitric acid, and hydrochloric acid.

In some other embodiments, in step 2), the concentration of the acid solution is 0.1-0.3 mol/L.

In some other embodiments, in step 2), the immersing is carried out for 12-24 h.

In some other embodiments, in step 2), the washing is carried out 3-5 times.

In some other embodiments, in step 2), the calcinating is carried out at a temperature of 700°C-800°C for 3-5 h in an atmosphere of an inert gas.

In some other embodiments, the inert gas is one selected form the group consisting of nitrogen, helium, neon, and argon.

In some other embodiments, in step 2), the calcinating is carried out with a heating rate of 2-6°C/min.

In some other embodiments, in step 3), the acid solution is prepared by mixing sulfuric acid and phosphoric acid in a volume ratio of 1:(1-3).

In some other embodiments, in step 3), the mass-volume ratio of the repaired graphite material, the potassium permanganate and the acid solution are 1:(0.3-0.5) :(40-60).

In some other embodiments, in step 3), the heating reaction is carried out at a temperature of 80°C-90°C for 1-2 h.

In some other embodiments, in step 4), the volume ratio of the suspension to the hydrogen peroxide is 1:(1-3).

In some other embodiments, in step 4), the hydrothermal reaction is carried out at a temperature of 120°C-130°C for 6-8 h.

In some other embodiments, in step 4), the washing comprises the following steps: washing the filter residue with 0.1-0.2 mol/L hydrochloric acid 3-5 times, and then washing with ultrapure water 3-6 times.

In some other embodiments, in step 4), the drying is carried out at a temperature of 60°C-80°C.

In some other embodiments, in step 4), the heating is carried out at a temperature of 100°C-120°C for 1-3 h in an inert gas atmosphere.

In some other embodiments, the inert gas is one selected from the group consisting of nitrogen, helium, neon, and argon.

A negative electrode material comprising the above-mentioned silicon-doped graphene composite material is provided.

A battery comprising the above-mentioned silicon-doped graphene composite material is provided.

In some other embodiments, the battery is a lithium ion battery.

### Advantages of the present disclosure:

1. The silicon-doped graphene composite material prepared by the present disclosure has excellent charge and discharge capacity and structural stability; the silicon-doped graphene composite material is based on the graphene structure, and silicon atoms replace the carbon atoms in the two-dimensional network structure of the graphene. The silicon-doped graphene composite material of the present disclosure has a layered structure similar to that of graphite materials, but is superior to other graphene materials in charge and discharge capacity, which is due to the fact that more lithium intercalation sites are constructed by introducing the silicon doped sites.
2. The preparation method of the present disclosure involves a primary process of doping with nitrogen and then doping with silicon. The N-C bond obtained has a relatively higher activity and can be easily replaced by silicon to obtain a C-Si bond.
3. The present disclosure pioneerly introduces a silicon-doped treatment to graphene, as well as the process of doping silicon by introducing silicon through a nitrogen doping process, and obtain a new type of silicon-doped graphene composite material. The graphene is prepared from a waste graphite anode material, which can lower the costs, recycle waste graphite, reduce environmental pollution. And the graphene prepared by the hydrothermal reaction has higher density and higher capacity, contributing to further reduce the expansion rate of the silicon nanomaterials, promote the transfer rate lithium ions and the gram capacity of the anode material.

### BRIEF DESCRIPTION OF DRAWINGS

The above and/or additional aspects and advantages of the present disclosure will become obvious and easy to understand from the description of the embodiments in conjunction with the following drawings, in which:

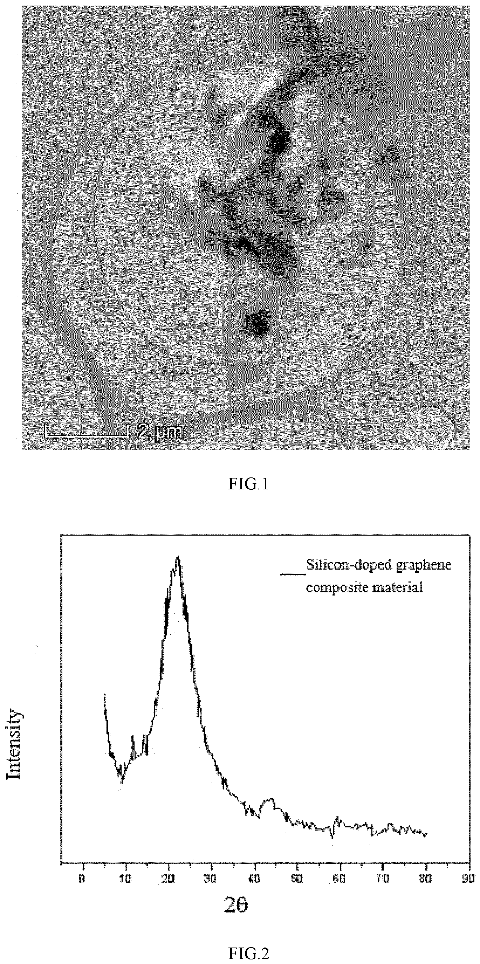

FIG. 1 is a TEM image of the silicon-doped graphene composite material of Example 1 of the present disclosure;
2 is an XRD pattern of the silicon-doped graphene composite material of Example 1 of the present disclosure.

### DETAILED DESCRIPTION

In order to make technical solutions of the present disclosure more clearly understood by those skilled in the art, the following examples are listed for explanation. It should be pointed out that the following examples are not intended to limit the protection scope claimed by the present disclosure.

### Example 1

The method for preparing the silicon-doped graphene composite material of this embodiment comprises the following specific steps:
(1) Discharging and disassembling a waste lithium battery to obtain a negative electrode sheet, heating the negative electrode sheet to 100°C in vacuum, and placing it in water to perform an ultrasonic treatment for 30 min and separating a resulting product to obtain a graphite negative electrode material and a current collector. The current collector is directly recycled;
(2) Immersing the graphite negative electrode material with 0.1 mol/L hydrochloric acid for 12 h, filtering to obtain a filter residue and washing it with pure water 3 times, draining the water, placing the filter residue in a tube furnace and introducing nitrogen to perform a reaction at a temperature of 700°C with a heating rate of 2°C/min, holding the temperature for 3 h to obtain a repaired graphite material;
(3) Preparing a solution A with sulfuric acid and phosphoric acid in a ratio of 1:1, mixing the repaired graphite material, potassium permanganate and the solution A in a mass-volume ratio of 1:0.3:40, and heating to 80°C to perform a reaction for 2 h to obtain a suspension
(4) Adding HzOz (suspension: HzOz in a volume ratio = 1:1) to the suspension, performing a hydrothermal reaction at 120°C for 6 h, then centrifuging to obtain a precipitate, washing the precipitate with 0.1 mol/L hydrochloric acid 3 times, then washing with ultrapure water 3 times, drying at 60°C before heating to 100°C in a nitrogen atmosphere and holding the temperature for 1 h to obtain a graphene;
(5) Microwave heating the graphene to 100°C in an ammonia atmosphere for 20 min to obtain a nitrogen-doped graphene;
(6) Mixing the nitrogen-doped graphene, silicon nanoparticles, citric acid monohydrate and anhydrous ethanol in a mass to volume ratio of 1:0.01:1:20, stirring for 20 minutes to obtain a mixture, and transferring the mixture to a hydrothermal reactor to perform a solvothermal reaction at 150°C for 6 hours, washing a resulting product 3 times with anhydrous ethanol to obtain the silicon-doped graphene composite material.

### Example 2

The method for preparing the silicon-doped graphene composite material of this embodiment comprises the following specific steps:
(1) Discharging and disassembling a waste lithium battery to obtain a negative electrode sheet, heating the negative electrode sheet to 125°C in vacuum, and placing it in water to perform an ultrasonic treatment for 45 min and separating a resulting product to obtain a graphite negative electrode material and a current collector. The current collector is directly recycled;
(2) Immersing the graphite negative electrode material with 0.2 mol/L hydrochloric acid for 18 h, filtering to obtain a filter residue and washing it with pure water 3 times, draining the water, placing the filter residue in a tube furnace and introducing nitrogen to perform a reaction at a temperature of 750°C with a heating rate of 4°C/min, holding the temperature for 4 h to obtain a repaired graphite material;
(3) Preparing a solution A with sulfuric acid and phosphoric acid in a ratio of 1:2, mixing the repaired graphite material, potassium permanganate and the solution A in a mass-volume ratio of 1:0.3:40, and heating to 80°C to perform a reaction for 2 h to obtain a suspension
(4) Adding HzOz (suspension: HzOz in a volume ratio=1:2) to the suspension, performing a hydrothermal reaction at 125°C for 7 h, then centrifuging to obtain a precipitate, washing the precipitate with 0.15 mol/L hydrochloric acid 3 times, then washing with ultrapure water 3 times, drying at 70°C before heating to 110°C in a nitrogen atmosphere and holding the temperature for 1.5 h to obtain a graphene;
(5) Microwave heating the graphene to 110°C in an ammonia atmosphere for 30 min to obtain a nitrogen-doped graphene;
(6) Mixing the nitrogen-doped graphene, silicon nanoparticles, citric acid monohydrate and anhydrous ethanol in a mass to volume ratio of 1:0.05:2:30, stirring for 30 minutes to obtain a mixture, and transferring the mixture to a hydrothermal reactor to perform a solvothermal reaction at 155°C for 8 hours, washing a resulting product 3 times with anhydrous ethanol to obtain the silicon-doped graphene composite material.

### Example 3

The method for preparing the silicon-doped graphene composite material of this embodiment comprises the following specific steps:
(1) Discharging and disassembling a waste lithium battery to obtain a negative electrode sheet, heating the negative electrode sheet to 150°C in vacuum, and placing it in water to perform an ultrasonic treatment for 60 min and separating a resulting product to obtain a graphite negative electrode material and a current collector. The current collector is directly recycled;
(2) Immersing the graphite negative electrode material with 0.3 mol/L hydrochloric acid for 24 h, filtering to obtain a filter residue and washing it with pure water 3 times, draining the water, placing the filter residue in a tube furnace and introducing neon to perform a reaction at a temperature of 800°C with a heating rate of 6°C/min, holding the temperature for 5 h to obtain a repaired graphite material;
(3) Preparing a solution A with sulfuric acid and phosphoric acid in a ratio of 1:3, mixing the repaired graphite material, potassium permanganate and the solution A in a mass-volume ratio of 1:0.5:60, and heating to 90°C to perform a reaction for 4 h to obtain a suspension
(4) Adding HzOz (suspension: HzOz in a volume ratio = 1:3) to the suspension, performing a hydrothermal reaction at 130°C for 8 h, then centrifuging to obtain a precipitate, washing the precipitate with 0.2 mol/L hydrochloric acid 3 times, then washing with ultrapure water 3 times, drying at 80°C before heating to 120°C in a neon atmosphere and holding the temperature for 2 h to obtain a graphene;
(5) Microwave heating the graphene to 120°C in an ammonia atmosphere for 40 min to obtain a nitrogen-doped graphene;
(6) Mixing the nitrogen-doped graphene, silicon nanoparticles, citric acid monohydrate and anhydrous ethanol in a mass to volume ratio of 1:0.1:3:40, stirring for 40 minutes to obtain a mixture, and transferring the mixture to a hydrothermal reactor to perform a solvothermal reaction at 160°C for 10 hours, washing a resulting product 3 times with anhydrous ethanol to obtain the silicon-doped graphene composite material.

### Comparative Example 1

A method for preparing a nitrogen-containing graphene coated biomass carbon anode material comprising the following steps:
Dehydrating a plant raw material at low temperature and then carbonizing at high temperature to obtain a primary biomass carbon powder material; removing impurities to obtain a final biomass carbon powder material; mixing the biomass carbon powder material and a nitrogen-containing graphene precursor polymer solution in a certain mass ratio uniformly, and heating to obtain a curing micro cross-linked slurry, performing a spray-drying process to the slurry to remove solvent, and then subjecting a resulting power to particle shaping by means such as jet milling, followed by calcinating at high temperature to prepare a nitrogen-containing graphene-coated biomass carbon anode material.

### Comparative Example 2

In Comparative Example 2, a carbon material is coated on the surface of graphene and silicon materials. The preparation process is the same as that of Example 1 in the patent application text with the publication number CN 106876689 A. The specific process flow is as follows:
1) Preparing of a nitrogen-doped graphene-silicon composite material, a silane coupling agent solution and an organolithium compound composite liquid:
   A) The preparation method of the nitrogen-doped graphene-silicon composite material comprises the following steps: subsequentially adding 3 ml hydrogen peroxide with a mass fraction of 30% and 0.1 g pyrrole in 100 ml graphene oxide dispersion with a concentration of 10 mg/ml and dispersing uniformly by a ultrasonic treatment, then adding 0.33 g of a silicon nanomaterial and dispersing uniformly to obtain a mixture, then transferring the mixture to a autoclave, heating up to 180°C, and holding the temperature for 6h, then naturally cooling to room temperature, filtering to obtain a residue, then drying the residue at 50°C for 48 h before transferring to a tube furnace; heating the residue to 850°C for 6 h in an argon atmosphere for carbonization to obtain a nitrogen-doped graphene-silicon composite material;
   B) Adding 20 g of γ-aminopropyltriethoxysilane to 500 ml of N-methylpyrrolidone, and dispersing uniformly to obtain a silane coupling agent solution;
   C) Adding and dissolving 3g of polyvinylidene fluoride to 500ml of N-methylpyrrolidone, and then adding 10g of n-butyllithium to dispersing uniformly at high speed to obtain an organic lithium compound composite liquid;
2) Adding 135 g of the nitrogen-doped graphene-silicon composite material obtained by the method of step 1) A) to the 500 ml of the silane coupling agent solution obtained in step 1) B) and soaking for 3 h, then filtering and drying at 250°C for 1 h to obtain a nitrogen doped graphene-silicon/silane coupling agent composite material;
3) Adding 80 g of the nitrogen-doped graphene-silicon/silane coupling agent composite material to 500 ml of the organolithium compound composite liquid obtained in step 1) C), stirring uniformly, and then evaporating solvent to obtain the product.

A lithium ion battery of this comparative example uses the above nitrogen-doped graphene-silicon composite anode material as a battery anode material, and the preparation method comprises the following steps:
1) Mixing 90 g of the above nitrogen-doped graphene-silicon composite negative electrode material, 5 g of a conductive agent SP, 5 g of LA132 binder, and 220 ml of double distilled water, stirring evenly to obtain negative electrode slurry;
2) Coating the negative electrode slurry obtained in step 1) on a copper foil, drying and rolling to obtain a negative electrode sheet;
3) Assembling a lithium ion battery in a glove box filled with argon with the negative electrode sheet obtained in step 2), an electrolyte of LiPF6/EC+DEC (EC, DEC volume ratio 1:1), a counter electrode of lithium sheet, and a separator of polyethylene (PE) membrane.

### Performance testing:

The silicon-doped graphene composite material prepared in the foregoing Examples 1-3 and the nitrogen-containing graphene coated biomass carbon anode material prepared in Comparative Example 1 and the nitrogen-doped graphene-silicon composite anode material prepared in Comparative Example 2 were respectively used as an anode material while a lithium sheet was adopted as a cathode to assemble button cells. And their first discharge tests were carried out at a rate of 1C. The results are shown in Table 1 and Table 2. It can be seen from Table 1 that at a rate of 1C, the first discharge specific capacity of the silicon-doped graphene composite material prepared by the present disclosure is higher than that of the nitrogen-containing graphene-coated biomass carbon anode material of the comparative example. The first discharge specific capacity of the material obtained in Example 2 is 862.3mAh/g, while the first discharge specific capacity of the one obtained in Comparative Example 1 is only 543.1 mAh/g, and the first discharge specific capacity of the material obtained in Comparative Example 2 is only 698.3mAh/g. Therefore, the silicon-doped graphene composite material of the present disclosure has a property of high-capacity. According to Table 2, at 1C rate, the cycle life of the silicon-doped graphene composite material prepared by the present disclosure is higher than that of the nitrogen-containing graphene-coated biomass carbon anode material of Comparative Example 1. After 500 cycles at 1C rate, the capacity retention rate of the material in Example 2 is 95.9%, while the capacity retention rate of the one in Comparative Example 1 is only 72.8%.

**Table 1 Performance of the button batteries**

| Item | Experiment 1 | Experiment 2 | Experiment 3 | Comparative Experiment 1 | Comparative Experiment 2 |
|---|---|---|---|---|---|
| First discharge capacity mAh/g | 811.9 | 862.3 | 812.1 | 543.1 | 698.3 |
| First charge-discharge rate % | 89.8 | 95.9 | 89.9 | 81.2 | 89.5 |

**Table 2 Cycle performance of the full batteries**

| Item | Experiment 1 | Experiment 2 | Experiment 3 | Comparative Experiment 1 | Comparative Experiment 2 |
|---|---|---|---|---|---|
| Discharge capacity retention rate after 100 cycles at 1C % | 98.89 | 99.5 | 99.23 | 88.5 | 99.12 |
| Discharge capacity retention rate after 300 cycles at 1C % | 95.62 | 99.03 | 96.56 | 83.21 | 94.56 |
| Discharge capacity retention rate after 500 cycles at 1C % | 91.11 | 96.21 | 92.4 | 72.8 | 89.5 |

FIG. 1 is a TEM image of the silicon-doped graphene composite material of Example 1. From the Figure, it can be concluded that the composite material has a bulk morphology with a size of about 300 nm; FIG. 2 is a XRD pattern of the silicon-doped graphene composite material of Example 1, silicon is doped in graphene in the composite material prepared by the present disclosure. It can be seen from Table 2 that the cycle performance of the lithium ion battery (button cell) prepared by using the silicon-doped graphene composite material obtained in Examples 1-3 is significantly better than the one of comparative example at each stage. It can be seen from Figures 1-2 and Table 2 that the silicon-doped graphene composite material of the present disclosure has a layered structure similar to that of a graphite material, and more lithium intercalation sites are constructed through the silicon-doped sites, which facilitates an increasing capacity, and then improves the structural stability of the material, thereby further promotes the cycle performance of the material.

The silicon-doped graphene composite material and the method and application thereof provided by the present disclosure have been described in detail above. Specific examples are used herein to illustrate the principles and implementation of the present disclosure. The above description of examples is only for the purpose of helping understand methods and core concepts of the present disclosure, including best modes, and also enables any person skilled in the art to practice the present disclosure, including manufacture and use of any device or system, and implementation of any combined methods. It should be noted that several improvements and modifications can be made by those skilled in the art to the present disclosure without departing from the principles of the present disclosure, which improvements and modifications also fall within the protection scope claimed by the claims. The protection scope of the present disclosure is defined by the claims and may include other embodiments that can be thought of by those skilled in the art. If these other embodiments have structural elements that are not different from the literal expression of the claims, or if they include equivalent structural elements that are not substantially different from the literal expression of the claims, these other embodiments should also be included within the scope of the claims.

## Claims

1. A silicon-doped graphene composite material comprising silicon and graphene; wherein the silicon is doped in the graphene.

2. The silicon-doped graphene composite material according to claim 1, wherein silicon and carbon in the silicon-doped graphene composite material have a molar ratio of 1: (10-120).

3. A preparation method of the silicon-doped graphene composite material according to any one of claims 1 and 2, comprising the following steps:
(1) heating the graphene in an ammonia atmosphere under microwave to obtain a nitrogen-doped graphene;
(2) adding the nitrogen-doped graphene, a silicon nanoparticle, and an organic acid to a solvent to perform a solvothermal reaction, and washing a resulting product to obtain the silicon-doped graphene composite material.

4. The preparation method according to claim 3, wherein in step (1), the heating is carried out at a temperature of 100°C-120°C for 20-40 min under microwave; wherein in step (2), the solvothermal reaction is carried out at a temperature of 150°C-160°C for 6-10 h.

5. The preparation method according to claim 3, wherein in step (2), the organic acid is citric acid monohydrate; wherein in step (2), a mass ratio of the nitrogen-doped graphene, the silicon nanoparticle, and the organic acid is 1:(0.01-0. 1) :(1-3).

6. The preparation method according to claim 3, wherein the graphene is prepared by the following method:
1) discharging and disassembling a waste lithium battery to obtain a negative electrode, heating the negative electrode, and then placing the negative electrode in water for an ultrasonic treatment to obtain a graphite negative electrode material and a current collector;
2) immersing the graphite negative electrode material in an acid solution, filtering to obtain a filter residue, subjecting the filter residue to washing, drying, and calcinating to obtain a repaired graphite material;
3) mixing the repaired graphite material, potassium permanganate and a mixed acid solution to obtain a mixture, and heating the mixture to perform a reaction to obtain a suspension;
4) adding hydrogen peroxide to the suspension to perform a hydrothermal reaction, centrifuging to obtain a residue, subjecting the residue to washing, drying and heating to obtain the graphene.

7. The preparation method according to claim 6, wherein in step 2), the acid solution is at least one selected from the group consisting of sulfuric acid, nitric acid, and hydrochloric acid;
wherein in step 2), the calcinating is carried out at a temperature of 700°C-800°C for 3-5 h in an inert gas atmosphere;
wherein in step 4), the heating is carried out at a temperature of 100°C-120°C for 1-3 h in an inert gas atmosphere;
wherein in steps 2) and 4), the gas in the inert gas atmosphere is one selected from the group consisting of nitrogen, helium, neon, and argon.

8. The preparation method according to claim 6, wherein in step 3), the mixed acid solution is prepared by mixing sulfuric acid and phosphoric acid in a volume ratio of 1:(1-3); wherein in step 3), a mass-volume ratio of the repaired graphite material, the potassium permanganate, and the acid solution is 1 g:(0.3-0.5) g :(40-60) ml.

9. A negative electrode material comprising the silicon-doped graphene composite material of claim 1 or 2.

10. A battery comprising the silicon-doped graphene composite material of claim 1 or 2.
